# EUROPEAN PATENT APPLICATION

(11) **EP 2 228 764 A1**
(43) Date of publication of application: **15.09.2010**
(21) Application number: 10158492.8
(22) Date of filing: 26.06.2008
(51) Int. Cl.: G06Q 30/00

(54) **Method or apparatus for purchasing one or more media based on a recommendation**

(30) Priority: 29.06.2007 US 937776 P; 26.10.2007 US 592 P
(62) Divisional of application: 08826014.6
(71) Applicant: Genen, Lawrence, Honolulu, HI 96821 (US)
(72) Inventor: Genen, Lawrence, Honolulu, HI 96821 (US)
(74) Representative: Driver, Virginia Rozanne

(57) **Abstract**

Music is often embedded in or otherwise coupled to videos including television shows, movies, commercials, and user-generated video viewed on television, DVSs, movies theatres, or via computer networks. Disclosed are methods, systems, and apparatus enabling user selection and/or purchase of copies of the embedded music. The present invention allows a user to immediately purchase and obtain (e.g, by wireless transmission) complete versions of music associated with a video as well as other music by the artist or other artists. During presentation (play) of the video, a user can request information about the background music or related products through an interactive interface, which includes an indicator that alerts the user to subject media available for review and/or purchase. A method and apparatus for coupling audio data with identifier tags in cooperation with the interactive interface is also disclosed as is a control system for effecting operation of the interactive interface.

## Description

### RELATED APPLICATIONS

This application is a divisional of EP 08826014.6 which claims the benefit of U.S. Provisional Application No. 60/937,776, filed on June 29, 2007, and of U.S. Provisional Application No. 61/000,592, filed on October 26, 2007. The entire teachings of the above applications are incorporated herein by reference.

### BACKGROUND OF THE INVENTION

Music is often embedded in a variety of videos including commercials, television shows, movies aired on television (TV), Digital Video Discs (DVDs), and streaming video on computer networks, such as the Internet. At present, individuals watching videos have no way to quickly and easily identify the artist who created a particular song being played during the presentation of a given video, much less purchase a copy of the song in question. An individual can attempt to find song and artist information using computer network search sites; after searching successfully, the individual can purchase the song or album through an online retailer or a retail store:

Unfortunately, many commercials, television shows, movies, and streaming videos feature abbreviated versions of songs, which are difficult to identify. Further, these videos rarely identify the songs, making it difficult, if not impossible, to purchase copies of the songs. Currently, streaming videos (i.e., videos transmitted in real-time over a network, such as the Internet) often feature music used without permission from the copyright holder(s), depriving the copyright holder(s) of revenue and making it even more difficult to identify or purchase copies of the songs.

### SUMMARY OF THE INVENTION

The present invention provides a solution to the problems of the prior art.

A method or corresponding apparatus in an example embodiment of the present invention presents a first media (e.g., audio or music) associated with a second media (e.g., video, images, graphics, or text) to a user. A user then requests information about the first media. In response to the request, the invention process provides information about the first media to the user, where the information allows for the purchasing of a copy of the first media. If the user decides to purchase a copy of the first media, the process sells the copy to the user. In an embodiment, the first media is audio data (e.g., music) and the second media is video data (including video graphic and/or video image data). Further, the audio data and video data may be compatible with a Moving Picture Experts Group (MPEG) format.

In particular, the present invention enables consumers to purchase and download music embedded in video delivered through a television, computer network (e.g., the internet), movie theater, digital video disc (DVD) player, or mobile communications device (e.g., a suitably enabled cell phone). Preferred embodiments are based on relational database driven software. A user interface enables user selection and/or purchase of the embedded music as follows. When music embedded in any of a variety of different videos comes on (plays), an indicator, such as a gray musical note or a modified station identification overlay graphic (bug), is displayed in a corner of a screen display viewed by a user. Integrated in a remote control, there is a button with a matching/corresponding symbol of a musical note on it or similar user command means. When the user operates the button (commands), the invention system provides a menu that has at least two options: (1) an option to purchase the most recent song heard; and (2) an option to view a full menu of choices, enabling the user to navigate information and purchase other songs from the video, other songs by the same artist, other songs by related music groups, magazines subscriptions, music club subscriptions, books, movies, and the like.

Another method or corresponding apparatus in an example embodiment of the present invention provides a media recommendation engine that suggests recommendations to a user for purchasing music associated with a video. Specifically, the recommendation engine enables a viewer, watching a video, to immediately purchase songs, tickets to one or more live performances, or other items/services associated with or related to the video. It should be understood that a viewer can purchase shortened or full versions of songs/music playing in the video, in addition to versions of the songs/music in different formats, for example, mp3 files and cell-phone ring tones.

Yet another embodiment of the present invention provides to a user a third media associated with the first media. If the first media is a song, the third media may be additional songs by the same artist, concert tickets for the same artist, songs by similar artists, concert tickets for similar artists, or other items and services. In example embodiments, the invention process provides information about the third media to the user after the user requests information about the first media. In providing information about the third media, the invention process allows for the purchasing of a copy of the third media.

In another embodiment, an apparatus.or method presents a user with a first media (e.g., a portion of a song in a commercial) in association with second media (e.g., the commercial) and gives the user a cue to immediately (e.g., in real-time) purchase the first media associated with the second media. For example, a user is watching a commercial with a music clip playing in the audio background; the system presents the user with a cue (e.g., a symbol or other indicator) indicating that a copy of a complete version of the music clip is available for immediate purchase. Without reviewing any related information, the user purchases a copy of the complete version of the subject clip, possibly using previously entered payment/billing information or on a subscription basis or other arrangement, and receives a purchase confirmation. In embodiments, the system also presents a user with recommended items related to the music clip or artist of the music clip, such as additional songs, concert tickets, magazines subscriptions, music club subscriptions, and the like.

Further embodiments provide a user device for receiving purchased copies of the first media and the third media. In some embodiments, the user device downloads a copy of the first media and/or a copy of the third media to complete the transaction. In certain embodiments, the user device is a cell phone or other mobile communications device, and the third media is audio data, video data, or the like. Alternatively, the system may add a copy of the first media, a copy of the third media, or both to a user playlist, completing the transaction.

Additional embodiments provide a method or system for distributing copies of a first media according to a subscription service. A user creates an account, possibly with several respective user profiles for the different users authorized to use the account. A management server maintains the user accounts, compiling account and profile information, such as billing information, shipping information, user name, and password. The user accesses the account when purchasing a copy of a first media presented in association with a copy of a second media (e.g., when buying a copy of a song from a movie soundtrack). The management server authorizes the transaction, possibly using a personal identification number (PIN) or password, and updates the user account accordingly, possibly by adding a copy of the first media to a playlist. The management server may complete the transaction by authorizing the user to download a copy of the first media from a media server to a user device, such as a cell phone. In addition, the management server may also act in concert with a recommendation engine to track the user's preferences and present related items to the user when the user selects a first media.

In still yet another embodiment, a process or apparatus identifies artist information for a musical piece in audio data. After identifying the artist information, the process tags the audio data with a pointer or link (hyperlink) to the artist information. Once the audio data is tagged, the process can access the artist information during transmission of the audio data so as to allow a timely presentation of the artist information to a user.

### BRIEF DESCRIPTION OF THE DRAWINGS

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
Fig. 1 is a schematic view of a media display system with video and audio presentations in accordance with embodiments of the present invention.
Fig. 2 is a schematic view of a display system showing a screen view of a user menu for purchasing audio data in accordance with the present invention.
Fig. 3 is a schematic view of several screen views as seen by a user purchasing a copy of a song while watching a TV show in one embodiment of the present invention.
Figs. 4 and 5 are block diagrams of example embodiments of systems for distributing copies of a first media presented in association with a second media according to the present invention.
Fig. 6 is a flow chart illustrating an example embodiment of the invention process for providing copies of audio data.
Figs. 7A and 7B are block diagrams of data formats employed in the environments of Figs. 1-5.
Fig. 8 is a flow chart of the audio data tagging process of the present invention.
Fig. 9 is a block diagram of an example embodiment of an audio data tagging apparatus of the present invention.

### DETAILED DESCRIPTION OF THE INVENTION

A description of example embodiments of the invention follows.

Example embodiments of the present invention enhance any television program (TV played show, advertisement, and other media works) by allowing viewers to purchase background music or other media works included in the program soundtrack. Embodiments create an interactive experience for viewers and a new revenue stream for content creators, studios, and broadcasters by allowing context-sensitive purchasing. That is, the viewer can instantly buy a copy of the song that is playing in the background of a program on a TV.

The program being rendered is referred to as "the second media" or "another media," and the song or music in the program background or other part of the soundtrack is referred to as the "first media" or "subject media." The "first/subject media" may be formed of any video data, audio data, or other media/multimedia data, and the "second/another media" may comprise video data, audio data, media/multimedia data, and the like. Further, each media may be in the foreground, background, or other relation to the overall work piece. Similarly, "third media" is any of audio data, video data, other media/multimedia data, concert tickets, books, magazine subscriptions, music club subscriptions, etc. as will become apparent in the following descriptions of non-limiting embodiments of the present invention.

In an embodiment, the present invention identifies a start time and an end time of music or other media (first media) playing in the background of a video (second media). At a first identified time, (e.g., the start time), the invention process displays an icon, such as a musical note or modified station bug, to the user. The invention process removes the icon from view at a second identified time (e.g., the end time). Preferably, software controls the icon display. While the icon is in view, the invention process allows a user to purchase a copy of the background music (first media) being played. In addition, the invention process may also allow the user to view information about the music (first media) being played, including artist name, song title, and the like.

Other embodiments of the present invention may employ a symbol, indicator, or similar indicia for representing context-sensitive purchase operations instead of an icon. Still other embodiments may employ audible or tactile signals, such as those emitted by ringing or vibrating cell phones, to represent context-sensitive purchase operations.

In an embodiment, a system employing the present invention uses the artist name, song title, and/or album title of the piece of music (first media) playing in a video (second media) to create a unique identifier. The unique identifier identifies the media work (first media) playing, but also is associated with one or more additional media work (e.g., audio data by the same artist, concert tickets to upcoming performances by the same artist, audio data by similar artists or in similar genres, soundtrack information, books, magazines subscriptions, music club subscriptions, and the like) in a manner that allows a viewer of the video (second media) to purchase the additional media works (third media).

### User Interface and Equipment for TV-Based System

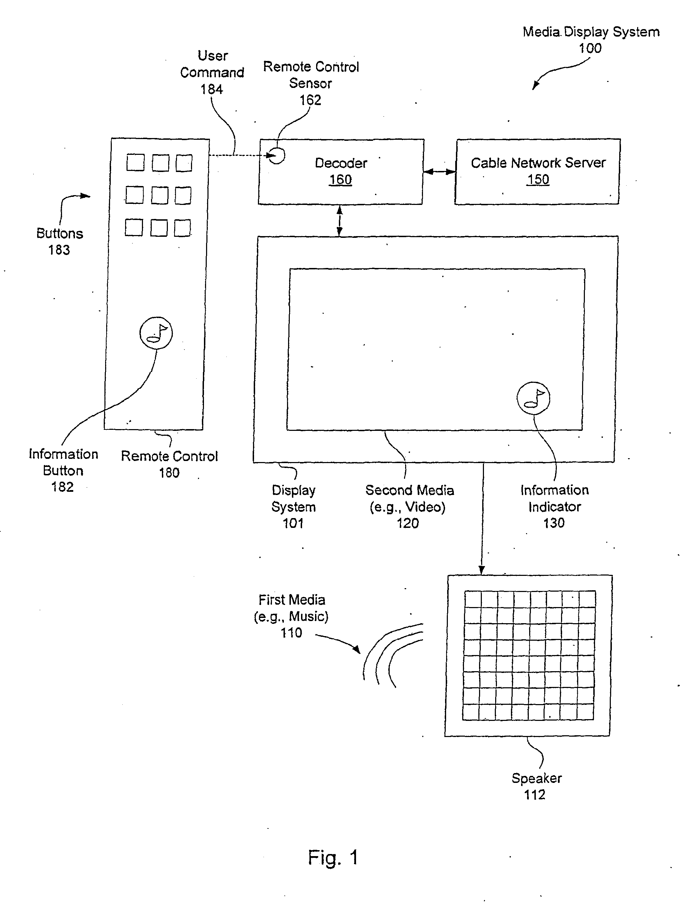

Fig. 1 shows a media display system 100 that renders a video and audio presentation in accordance with embodiments of the present invention. In an embodiment, a user experiences a first media (e.g., background music 110) delivered over a speaker 112 (or other audio equipment). The first media 110 is associated with a second media (e.g., a video 120) illustrated on or otherwise delivered through a display system 101. For example, a television (e.g., display system 101) plays a movie (e.g., video 120) and includes a corresponding soundtrack (e.g., music 110) during a portion of the movie. The example using a television is for non-limiting illustrative purposes only. Principles of the present invention may also be employed using a computer or other display monitor coupled to a cable network, computer network (e.g., the Internet), satellite network, optical (e.g., fiber optic) network, or other transmission service.

In operation, the background music (subject audio track portion) 110 is playing through the speaker 112 as the display system 101 renders screen views of the video 120. In certain embodiments, the video and audio media are transmitted from the cable network to the user's home or passed from a DVD player to a decoder 160, which determines whether the audio media has been tagged with an identifier. If an identifier exists, the decoder 160 notifies the display system 101 to place an information indicator 130 in the screen view of the display system 101 during rendering of the video 120. A user watching the video 120 on the display system 101 sees the information indicator 130 and recognizes that information is available about the background audio media 110 playing through the display system 101.

After seeing the information indicator 130, the user can obtain additional information about the background audio media 110 by sending an appropriate user command 184 to the decoder 160 with a controller, such as a wireless remote (or other) control 180. The user transmits the user command 184 to a remote control sensor 162 on the decoder 160 by pressing or otherwise operating a corresponding information button 182 on the remote control 180. Typically, the remote control 180 will have other buttons 183 that allow the user to enable or perform other operations.

In an embodiment, the remote control 180 uses a near infrared diode to emit a beam of light that illuminates the remote control sensor 162 of the decoder 160. This causes a user command 184 to be generated, which, in turn, causes the decoder 160 to responsively initiate a new display. Using a near infrared diode control is only one example of generating and transmitting user commands 184. Many different methods of transmitting (initiating) user commands 184 can be employed.

Next, the decoder 160 demodulates or otherwise processes the input signal, performs error correction, and decrypts the demodulated data if it is encrypted. The decoder 160 applies the demodulated audio signal as digital or analog data, as appropriate, and decodes the signal to produce output video and audio in either digital or analog form. In operation, the decoder 160 receives the user command 184 and correlates the user command with the current identifier in the background audio media 110. That is, the decoder 160 confirms presence of the identifier in the background audio media 110, identifies the identifier, and obtains relevant information relating to the background audio media 110. The obtained relevant information may include artist name, song title, publication information (album, soundtrack, date performed, performance city, etc.), and other similar audio media.

In an embodiment, the decoder 160 accesses a relational database.using the identifier as a key. The relational database is, for example, maintained at a cable network server 150 of the user's cable service provider. Other servers accessible through the cable service provider or cable network are also suitable. The relational database stores various information and, in turn, provides the information relevant to the background audio media 110. After obtaining the relevant information, the decoder 160 instructs the display system 101 to present, among other details, a user menu, including the relevant information. For example, the decoder 160 sends the received information request 184 to the display system 101. The display system 101 pauses the video 120 and audio 110 (e.g., a DVD movie) and provides the user with a new screen view, having a user menu, for facilitating a purchase of the audio media 110 or other related products. In an alternative embodiment, the display system 101 is an overlay (e.g., a picture in picture) providing the user with a different screen view, having the video 120 and a user menu. The user can operate the user menu to facilitate a purchase of the audio media 110 or other related products without disruption of the video 120.

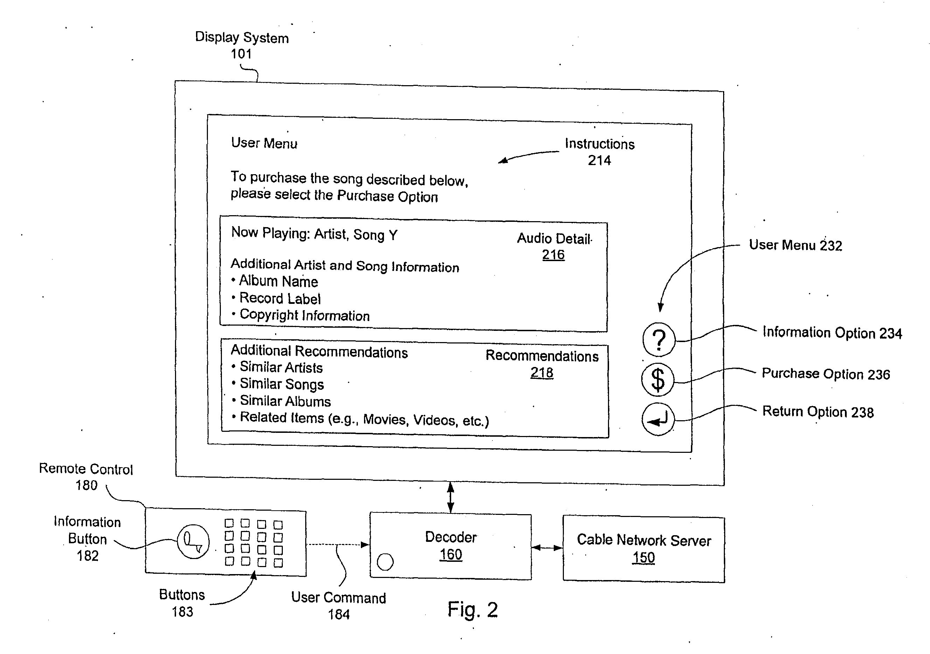

Fig. 2 shows a user menu 232 for purchasing audio data in accordance with principles of the present invention. In particular, a display monitor 101 provides a user menu 232 including information for background audio 110 currently playing through the display system 101. In use, a user is watching a commercial, television show, movie aired on television, DVDs, or other media (reference 120 generally) on the display monitor 101 and operates (activates) the information button 182, which, as described above, results in the user menu 232 being shown on display system 101. The displayed user menu 232 provides instructions 214 and information 216 about the subject audio (as retrieved from the supporting relational database described above), and options 234, 236, 238 for user action.

From the user menu 232, a user may select at least one of the following actions using the remote control 180 equipped with information button 182: (1) view the instructions 214 and/or audio detail 216; (2) request additional information about other artists or other shows by the displayed artist by operating the information option 234; (3) purchase a copy of the music described in the audio detail 216 by exercising a purchase option 236; or (4) return to the previous screen view via a return option 238. The user may select options 234, 236, 238 by pressing or otherwise activating buttons 183 on the remote control 180, including the information button 182, to emit an appropriate user command 184.

### Instructions 214 and Audio Detail 216

In an embodiment, the user menu 232 displays instructions 214 to the user. The instructions 214 can include information about how to purchase a product or how to obtain information. For example, instructions 214 may be simply "To purchase the song described below, please select the Purchase Option." To aid a user in a decision to purchase a copy of the song, the user menu 232 may also include an audio detail portion 216 having information about the subject audio 110. In an example embodiment, the audio detail 216 includes at least some of the following information: artist/group name, song title, album name, image of album cover, record label, copyright information, price, availability, and other relevant information. The audio detail 216 may also include other songs related to the video 120 (e.g., other music in the video 120 that was playing on the display system 101 at the time the information button 182 is pressed). Using the audio detail 216, a user can make an informed decision and yet have the ease of purchasing the desired audio quickly (i.e., through the same or common user menu series 232 and through the same service provider of the video 120 originally being viewed by the user).

### Information Option 234

The information option 234 provides the user with additional information about the artist(s) or related artist(s). In use, a user activates the information option 234, triggering the presentation of a succeeding screen view (not shown) that provides more information, such as name of a soundtrack with the audio presented in the user menu 232, other albums by the same artist, related audio, audio in the same genre, or other suggestions. A recommendation area 218, supported by a recommendation engine, as known in the art, displays the suggestions of other media as shown in display views of Fig. 2. Recommendations of other media, including purchase options involving recommended media, are described in greater detail below. The information option 234 can be activated using a remote control 180 or other suitable technology known in the art.

### Purchase Option 236

When the user decides to purchase the audio, the user selects the purchase option 236 using the remote control 180. After selecting the purchase option 236, the display system 101 provides an additional screen view for making a sales transaction and confirming user information (e.g., billing information, shipping address, and the like). The invention system may enable user input or selection of quantity, delivery method, payment method, and so forth. Some embodiments may default to the billing address and user account on record for the user at the cable service provider or other subscription service provider. This information may be made available to decoder 160 and display system 101 from the cable network server 150 or other suitable server or network.

After gathering and displaying the information necessary for the transaction, the display system 101, upon user command 184 to complete the purchase, sends the relevant information (e.g., purchase and delivery information) to the decoder 160. In turn, the decoder 160 processes (i.e., encrypts, encodes, etc.) the relevant information and transmits the order to the cable network server 150. Alternatively, the decoder 160 forwards the order over a computer network (e.g., Internet) connection supported by the cable network service provider. The forwarding address may be a hyperlink supplied in the relevant information retrieved from the relational database for the subject audio 110. Thus, there may be maintained in the relational database a respective hyperlink for the audio media (such as a hyperlink to the copyright owner agent, distributor, other sales office, and the like).

The order may be received by one or more vendors on a global computer network, such as the Internet, or in third-party connection with the cable service provider. After receiving the order, the vendor processes the order and ships the purchased audio to the user in exchange for a payment. Alternatively, completing the order may provide a user with an audio media download via the display system 101 or decoder 160. In an embodiment, completing the order results in the invention system/vendor/cable service provider: (1) sending an email message to the user including a link for downloading the purchased audio media; (2) mailing a copy of the audio media recorded on a portable memory (e.g., a compact disc) to the user; (3) transmitting a copy of the audio media to a suitably enabled user device (e.g., a cell phone); or (4) providing the user with the audio media in any other suitable manner. The features of the decoder 160 can be in the form of software stored outside of the decoder 160 (e.g., in a television, computer, or other processor/processing device).

Users may also use web-based accounts to purchase songs or albums they hear while watching their favorite television shows. Once a user 'opts-in' to the purchase, a list menu appears; in 1 to 2 clicks of a remote control, the user verifies the purchase using a user account previously registered with a computer network-based service. After completing the purchase, the computer network-based service bills the corresponding user account, and the user receives a link via email to download the song or album.

### Return Option 238

Activating the return option 238 allows a user to return to the previous screen view (e.g., the movie 120). For example, if a user is viewing the user menu 232 and activates the return option 238, the user is returned to the movie 120 on display system 101. The display system 101 can provide a visual or tactile presentation of images (including text) acquired, stored, or transmitted in various forms. While most common displays are designed to present information dynamically in a visual medium, tactile displays, typically for the blind or visually impaired, use mechanical parts to dynamically update a tactile image (usually of text) so that the image may be felt by the fingers.

### Examples of User Selection or Purchase

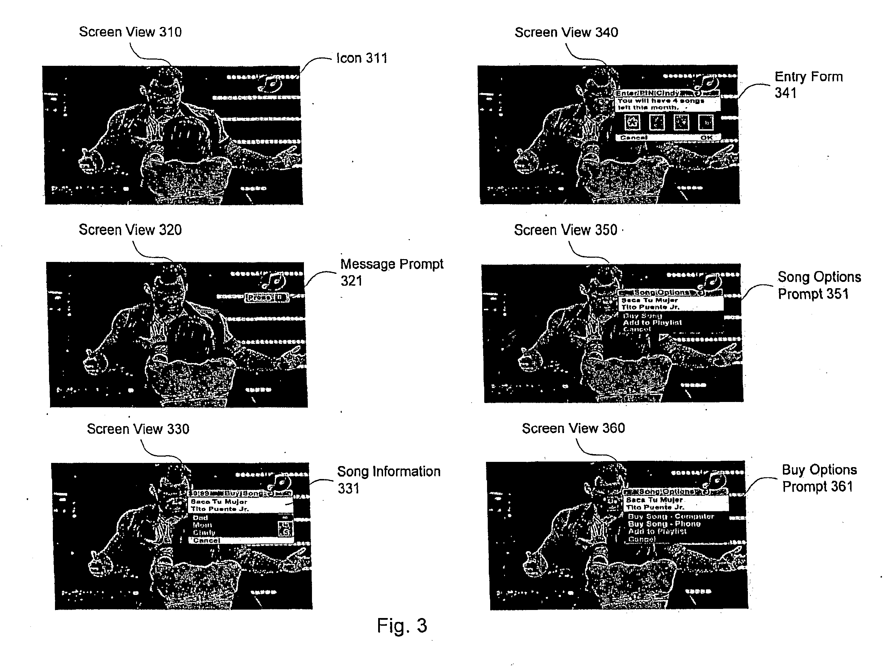

Fig. 3 is a diagram that shows a sequence of screen views from a display unit according to non-limiting example embodiments of the present invention. Here, the user subscribes to a service that enables the purchase or selection of background music according to the present invention. The service comes with different options, including an "all-you-can-eat" option with an unlimited number of selections and other options with limited numbers of selections in a given time period or in total. By subscribing, the user enables notification that background music is available for purchase/selection and presentation of information about the available background music and related items.

In subscribing, the user typically registers at least one payment method and at least one delivery method, where the delivery method specifies the format of the purchased/selected media, among other things. For example, the user might specify receiving copies of the purchased/selected media as mp3 downloads to a computer, links in email messages, or downloads to cell phones or mobile communications devices. For user subscriptions or accounts with multiple user profiles, each user profile may have a corresponding delivery method.

As the user watches a video, an icon 311 appears to indicate that the background music is available for purchase as shown in screen view 310. After a few seconds, a message prompt 321 appears to indicate how the user can learn more about the background music (screen view 320). For example, the message prompt may say, "Press B," where B is a button on a remote control 180 of Figs. 1 and 2. After a few more seconds without user interaction, the icon 311 and the message prompt 321. disappear. Alternatively, the icon 311 and message prompt 321 may disappear after the song segment ends, to reappear the next time an available song plays.

If the user decides to purchase a copy of the song and interactively operates the appropriate remote control buttons 183, the display unit 101 shows song information 331 as in screen view 330. The song information 331 may display song title (e.g., "Saca Tu Mujer"), artist (e.g., "Tito Puente Jr."), and price (e.g., "$0.99"). In addition, if the user has created multiple user accounts or a user account with multiple profiles, the display unit 101/user interface prompts the user to pick a particular account or profile (e.g., "Dad," "Mom," and "Cindy"). The user may also cancel the purchase.

After the user selects a particular account using the remote control 180, the user may receive a prompt with an entry form 341 for a password or a personal identification number (PIN), as shown in screen view 340. The entry form 341 may also show information pertaining to the user account, such as the number of songs remaining in a subscription. In embodiments that require a PIN or password, the user enters the PIN using the remote control 180, causing the display unit 101/user interface to show a song option prompt 351 as in screen view 350. The song option prompt 351 shown in Fig. 3 offers the user the option to purchase the song immediately and the option to add the song to a playlist. Songs on the playlist may be purchased at a later date, checked-out or rented for a given period of time, or simply saved for future reference.

By selecting the purchase option, the user may be presented with a buy options prompt 361 as in screen view 360. For example, the buy options prompt 361 in Fig. 3 gives the user the choice of downloading the copy of the song in question to a computer, cell phone, digital music player, or other suitable device. If the user opts to download the song copy to a cell phone, a text message may trigger or otherwise effect the download, completing the transaction.

In another embodiment, the system allows a user to immediately purchase copies of media without being presented information related to the media (e.g., the song title, artist name) until after the purchase is complete. For example, the user may recognize a song and want to purchase the song without viewing any general information about the song. The invention system allows the user to purchase the song by making a purchase request, which is processed using the user's known payment information as described above. After the purchase request is processed, the user is presented with a confirmation having information related to the purchased media as well as recommended suggestions (like that of recommendations 218 of Fig. 2) for additional purchases related to the purchased media.

### System Equipment and Architecture

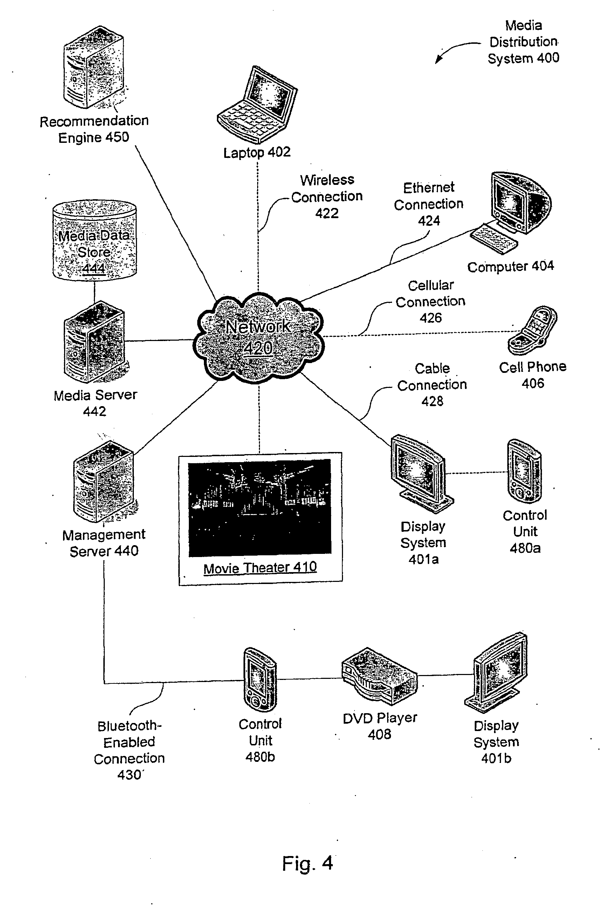

Fig. 4 is a block diagram that shows an example embodiment of a media distribution system 400 for providing copies of a first media presented in association with a second media. In the media distribution system 400, a management server 440, media server 442 (which connects to a media data store 444), and recommendation engine 450 connect to a network 420, which also connects to a variety of user devices, including a laptop 402, computer 404, cell phone 406, display system 401a (e.g., a television, display frame, monitor, or other display), and movie theater 410. The connections include a wireless (e.g., WiFi) connection 422, ethernet connection 424, cellular connection 426, cable connection 428, and the like. The network 420 may connect to any suitable device using any suitable connection.

In addition, the management server 440 may connect directly to a control unit 480b or to a decoder (e.g., decoder 160 of Figs. 1 and. 2) using a Bluetooth-enabled connection 430 or other suitable connection. The control unit 480b is coupled for communication to a digital media player 408 that renders media on a display system 401b.

To enable network-based purchases, the user creates a user account accessed via the management server 440, where the account includes personal identification information, financial information, and any other information needed to complete a transaction. Once the user provides the information, the user can freely use the invention process and system to view information about and purchase media. If the user completes a purchase of the media, the system may later use the user-provided information to seamlessly complete subsequent transactions. In an embodiment, a downloadable client-side software program is installed on the user's computer (e.g., laptop 402 or computer 404) to store payment information, enabling the user to immediately make purchases without having to enter or re-enter payment information each time. In another embodiment, the user's payment information is stored in an online music database website and is accessible if the user is logged into the online music database website, which may be used by many vendor sites to facilitate sales transactions. As a result, the user's payment information is automatically used to complete the purchase, in real time, without undue burden on the user.

For further convenience, the media distribution system 400 provides a downloadable client program enabling a user to remain logged-in to a first website, such as an online music store. To use the first website, the user provides bank account/internet payment information, other payment information, or other sales transaction information (e.g., mailing address) for use in the event a user would like to immediately purchase a product or an item. For example, the user is watching videos on a second website when the invention system 400 alerts the user to a purchasable song (using an ID in the song) related to the video being watched. The user makes a request to purchase the song, causing the system 400 to immediately download the song and complete a payment using the purchase information from the first website. Thus, the user purchases a song in real-time without the need of entering payment or other sales transaction information.

In one embodiment, the management server 440 asks the user to confirm the download request of the song by identifying a song title and artist name. In other embodiments, however, the user is not presented with a confirmation before downloading the song. The songs and/or videos typically include an identifier or tag allowing the system 400 to identify the song and/or video as purchasable. Further details of tagging or using an identifier are described below.

The media distribution system 400 can provide audio and video data to users using any one of a variety of channels. For example, a user watching a TV show on a display system 401a can purchase or select copies of songs using a control unit 480a as described above and in Figs. 1-3. In addition, users watching shows on DVDs (or other suitable local storage media, such as CDs, CD-ROMs, VHS tapes) can also purchase copies of the video. For example, when a suitably encoded DVD playing on a DVD player 408 triggers an indicator 130, 311 on a display unit 401b, the user can purchase or select a copy of associated song using a control unit 480b coupled for communication directly to the management server 540.

In the embodiment shown in Fig. 4, the media distribution system 400 also capitalizes on the movie industry's transition from film to digital media, which can be distributed via networks, hard drives, DVDs, or satellite and projected using digital projectors instead of film projectors. Digital media can incorporate additional layers of information, such as audio artist information, possibly added during film production. In addition, because movies list soundtrack information in the credits, audio artist information could be added during postproduction or at later stages (and possibly even in real time). In certain embodiments, the present invention uses the additional information layers to identify one or more media/items and possibly cross-references the additional information with a database to generate recommendations for viewers, who can purchase copies of media related to the information or the recommendations.

For example, consider a viewer at a movie theater 410 watching a movie that begins with previews, including shorter movies, movie trailers, and advertisements. The viewer watches the previews or the feature movie and is notified that the background music associated with the previews or the movie is available for purchase. A typical notification may include a gray musical note symbol, icon, or similar indicia appearing in a portion of the movie screen, a text number (e.g., a short message service (SMS)) appearing on the screen, a notification from a mobile device, and a musical note indicator appearing or sounding on a viewer's portable music player device.

The viewer can purchase or otherwise select a copy of the song in question using a cell phone (media device) 406 or other suitable device and a user account maintained by the management server 440. When a song in the movie soundtrack is available for purchase, the management server 440 sends an SMS message to the user's cell phone 406. When the user selects or purchases a copy of the song, the media server 442 transmits the copy from the media data store 444 to the user's cell phone or suitably enabled device. The user may also download the copy of the first media to a laptop, digital media (i.e., mp3) player, personal computer, or any other suitable device at a later time.

In some embodiments, the computer network-based service may transmit a copy of the song or album directly to a wireless device, such as a cell phone 406 or suitably enabled digital music player. For example, the user enters the number of a cell phone 406 when creating or registering a web-based account. Subsequently, when the user selects or purchases a song, the computer network-based service transmits a copy of the song directly to the registered cell phone.

The user may also use the cell phone 406 to select or purchase copies of subject media when viewing media in other locations, possibly by sending an SMS text message to the management server 440. For example, consider a user in an airport, supermarket, office building, airplane, or other environment where videos are rendered on publicly accessible screens. A user in an airport lounge hears background music in a video on a TV in the lounge and decides to purchase a copy of the background music. The user sends a text message to the management server 440 or suitable proxy, where the text message includes enough information to identify the desired song. For example, the TV might display a number when the background music commences, similar to the display of the indicator 130 in Fig. 1. In other embodiments, a wireless (e.g., Bluetooth) network might couple information directly to the user's cell phone 406, enabling the user to select or purchase the correct piece of background music.

Users can also purchase songs playing in the background of video streamed or downloaded over the network 420 (which may be the Internet or may be connected to the Internet). For example, users may watch streaming video on a laptop 402, computer 404, cell phone 406, or other suitably enabled device connected to the network 420. In many cases, the data stream includes index information about the videos from a relational database (not shown), enabling users and viewers to search for videos or other media works.

Metadata associated with the audio content may also enable the user to purchase or select a copy of audio content and/or related items/services. For example, the recommendation engine 450 may provide the user with recommendations about other songs by the same artist, albums by the same artist, songs by similar artists, albums by similar artists, concert tickets, books, DVDs, memberships to clubs, subscriptions to websites, magazines, and music clubs, etc. The user may also purchase and/or automatically download the selected song(s) to users' computers, digital music players, MP3-enabled cell phones, other mobile communication devices, and the like. In an embodiment, the recommendation engine 450 generally compares the first media to some reference characteristics. The recommendation engine 450 may use a content-based approach that compares collected data from the user in question to similar data collected from other users and calculates a list of recommended items for the user/viewer.

At any point, the recommendation engine 450, possibly acting in concert with the management server 440, may solicit the user's opinion regarding his own musical or other preferences. The management server 440 may also present the user with a survey regarding use of the media distribution system 400. Ratings can be compiled based on these surveys to determine the effectiveness of the system. Surveys and ratings aid the system in improving the quality of the user-generated identification and association process.

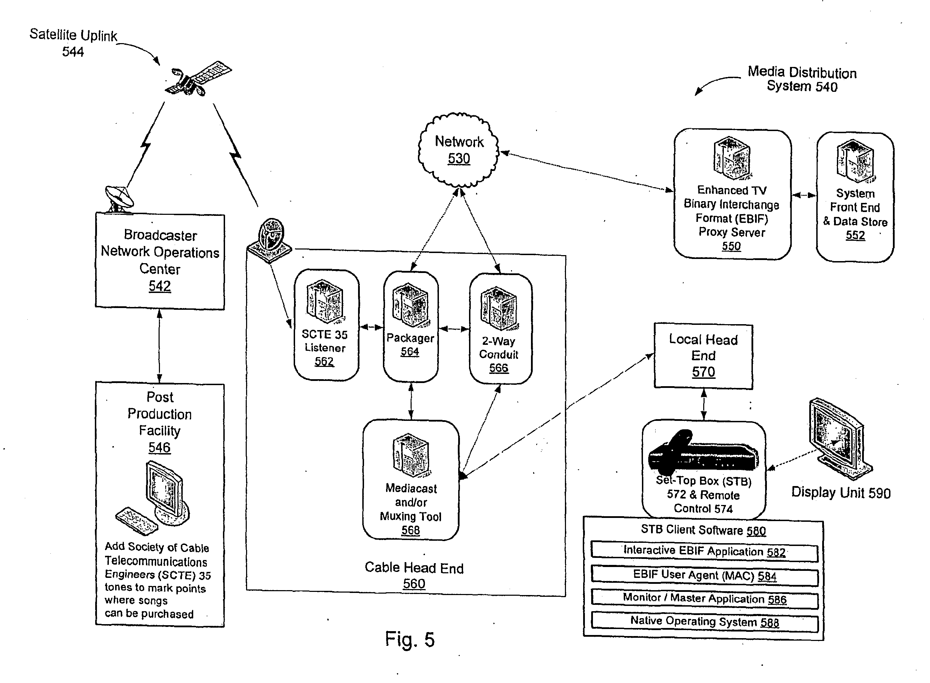

Fig. 5 shows an alternative media distribution system 540 for tagging, distributing, and displaying a first media in association with a second media. A post production facility 546 adds cues to a video to indicate when the songs from the video soundtrack are available for purchase. In one embodiment, the cues conform to Society of Cable Telecommunications Engineers (SCTE) 35 standards, which are the digital equivalent of analog cue tones. In analog systems, a first cue tone causes a tape player to play a tape; a second cue tone causes the tape player to stop playing the tape. In digital systems, such as those that conform to SCTE 35 standards, cues trigger communication between a splicer and a server that allow for the insertion of content into a digital program stream. Once the cue tones have been added, the post production facility 546 transmits the annotated video to a broadcaster network operations center 542, which uploads the video to a cable head end 560 via a satellite uplink 544 or other communications link.

The cable head end 560 monitors the video for cues using an SCTE 35 listener 562. When the listener 562 detects a cue, it passes a signal to a packager 564, which requests additional information from an enhanced TV binary interchange format (EBIF) proxy server 550. The proxy server 550 retrieves the relevant information from a system front end and data store 552, then passes the information to the packager 564 via network 530 and a 2-way conduit 566. The resulting video and song information is fed to a mediacast and/or multiplexing tool 568, which transmits the resulting video product to a local head end 570.

The local head end 570 connects to a set-top box (STB) 572 and a remote controller 574, which connect, in turn, to a display unit 590. The STB 572 and the remote controller 574 both use a variety of client software 580, including an interactive EBIF application 582, an EBIF user agent 584, such as a media access controller (MAC), a monitor/master application 586, and a native operating system 588. The monitor/master application 586 and the native operating system 588 manage the basic operations of the STB 572. The EBIF application 582 is a group of resources that include one or more EBIF resources, which represent viewable information in the form of pages. The EBIF user agent 584 acquires, decodes, presents, and executes instructions contained in EBIF resources in order to present multimedia pages to a viewer. Together, the EBIF application 582 and EBIF user agent 584 present the interactive forms that allow the user to select copies of songs.

The STB 572 presents the video to a user via the display unit 590, with indicators appearing at appropriate places to indicate that portions of the soundtrack are for sale (or in-system purchase). The user purchases desired songs using the STB 572 and the remote controller 574, which transmit the appropriate information to the front end 552 via a relay from the local head end 570, to the cable head end 560, to the 2-way conduit 566, to the network 530, and to the proxy server 550.

### Example Method of Purchasing Copies of Songs

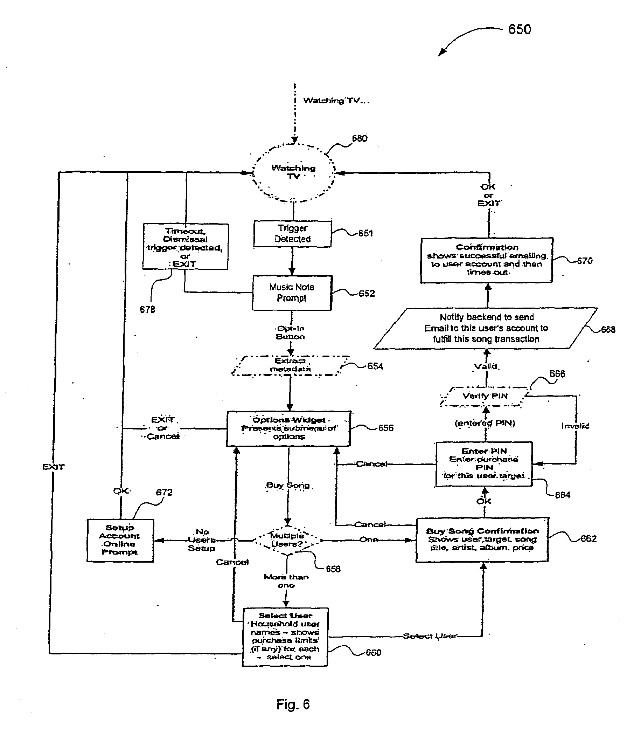

Fig. 6 is a flow diagram that illustrates a process 650 for purchasing audio data in accordance with embodiments (e.g., media distribution systems 400, 540 and display systems 100) of the present invention. The process 650 begins (and ends) with the user watching TV or a display system 101, 401 a, 401 b, 402, 404, 406, 410 (step 680). A trigger (step 651) causes the display to show a music note prompt or other suitable indicator 130, 311 (step 652) to the user, indicating that the audio content presented with the TV show is for sale if available for purchase here. If the user dismisses the prompt 130, 311 or the prompt times out, the process 650 returns to the watching TV (steps 678 and 680). If instead the user selects an information/purchase button 182 on a control unit 180, 480a, 480b, 402, 404, 406, the process 650 extracts song metadata (step 654), such as title, artist name, and price, then presents the user with a menu (step 656). At this point, the user can select a menu option to purchase the song or return to watching TV (step 680).

If the user selects the option to purchase the song, the process 650 checks the number of users on the account (step 658). For multiple users, the process 650 asks the user to select a profile or cancel (step 660) before confirming the purchase (step 662). For single-user accounts, the decision to purchase the song leads directly to confirmation 662. If there is no user account, the process 650 prompts the user to create an account (step 672) before continuing. In some embodiments, completing the user account setup at step 672 returns the user to watching TV (step 680). Other embodiments allow the user to purchase the song immediately after setting up an account.

For users purchasing the song (step 662), confirming the purchase may lead to a PIN request (step 664) and a subsequent PIN verification (step 666). If PIN verification (step 666) shows that the user entered a valid PIN, the process 650 notifies the backend to fulfill the transaction (step 668), possibly by sending to the user an email containing a link to a copy of the song. Alternative embodiments send a copy of the song to a user's cell phone 406, audio player, mobile communications device, digital media player, or other device 402, 404 configured for such communication. After completing the transaction, the process 650 sends a confirmation (step 670) to the user, then returns the user to watching TV (step 680).

If the PIN is invalid at step 666, the process 650 prompts the user the re-enter the PIN (step 664). Multiple invalid PIN entries may lock the user account and return the user to watching TV (step 680).

### Audio Data Tagging Process

With respect to a video production (video work), such as a movie, TV program, etc., there is typically one track or layer of video (image) data, one track or layer of audio data for a foreground or primary portion (e.g., character speech), another audio track or layer for background audio (e.g., background music), and a further audio track or layer for special sound effects (e.g., breaking glass, thunder, gunshots, etc.). There may also be additional tracks or layers for visual effects and closed captioning. Thus a media work is formed of multiple data streams, tracks, and/or layers, each formatted and digitally represented with respective techniques for ease of transmission, decoding, and maintaining data integrity (losslessness).

In digital representations of audio data, the representation of the audio signal is no longer directly analogous to the sound wave. Instead, the value of the signal is sampled at regular intervals by an analog-to-digital converter (ADC or A/D), which produces numbers (digits) that represent the value of each sample. The resulting stream of numbers represents the audio signal in digital format and can be stored as a computer (or electronic) file. Typically, the digitized signals are broken into packets, each of which includes information about the signal type, signal destination, and signal itself. These packets can be transmitted across a network, such as a cable TV network or a global computer network (e.g., the Internet), to a user device; such as a decoder 160, set-top box 572, computer 402, 404, cell phone 406, or other suitably enabled device that presents the data to a user.

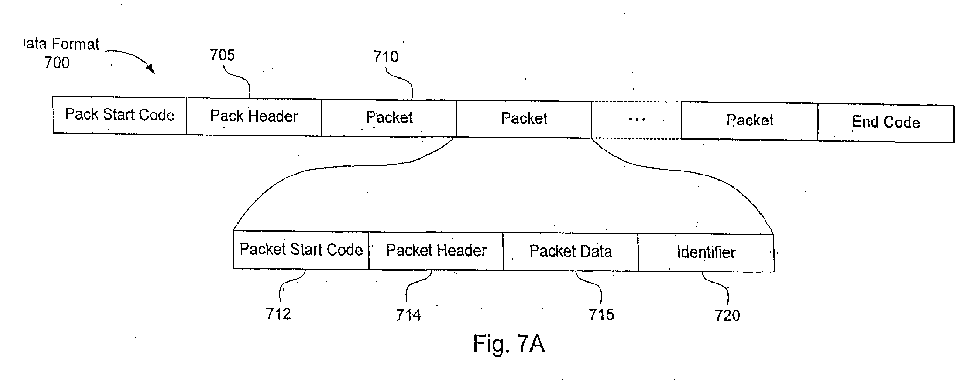

Fig. 7A is a view of a generic data format 700 employed in any of the invention systems of Figs. 1-5. In particular, the data format includes a pack header 705 and a series of formatted packets 710. Each packet 710 is formatted with a packet start code 712 followed by a packet header 714. Packet data 715 and an identifier 720 for tagging the audio data follow each packet header 714. To allow the decoder 160 of Figs. 1 and 2 and the set-top box 572 and listener 562 of Fig. 5 to identify audio data, an apparatus, such as the post production facility 546 of Fig. 5, tags the audio data with an identifier 720 that can later be referenced by the decoder 160 or the listener 562. The identifier 720 unequivocally identifies the audio data that is tagged. By unequivocally identifying the audio data, the decoder 160 of Figs. 1 and 2 or the packager 564 of Fig. 5 can obtain relevant information (e.g., from a relational database) about the audio data using the identifier. Tagging of the audio data may be done using common or known technology, such as using audio editing software. In this way, the audio data may be identified by the decoder 160 of Figs. 1 and 2, enabling a user to purchase the audio data over a display as described above.

Another example of digital data formats is the Moving Picture Experts Group (MPEG) family of standards for audio-visual information (e.g., movies, video, music). At present, MPEG-2 is a common standard for coding of moving pictures and associated audio information. Moreover, MPEG-2 is widely used to specify the format of the digital television signals that are broadcast by terrestrial (over-the-air), cable and direct broadcast satellite TV systems. MPEG-2 also specifies the format of movies and other programs that are distributed on DVD and similar disks. The MPEG-2 standard also allows for storing and transmitting text and other data (e.g., a program guide for TV viewers, to be added to the video and audio data streams). TV stations, TV receivers, DVD players, and other digital data equipment are typically designed to this standard.

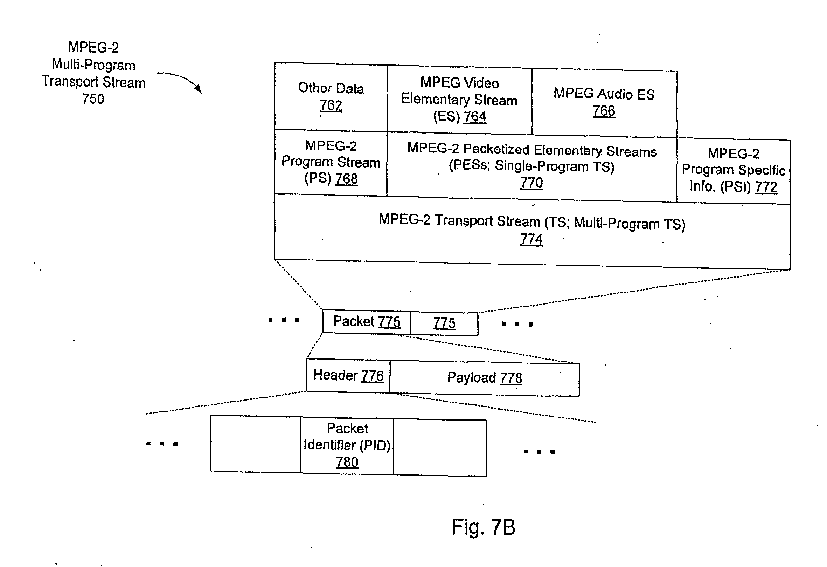

Fig. 7B is a block diagram of an example MPEG-2 multi-program transport stream 750. In general, the multi-program transport stream 750 supports elementary streams and packetized elementary streams (PESs). Typical elementary streams include other data 762, MPEG video elementary stream 764, and MPEG audio elementary stream 766. Packetized streams include MPEG-2 program stream 768, MPEG-2 PESs 770, and MPEG-2 Program Specific Information (PSI) 772. The PSI 772 includes information about the data, such as time stamps that identify the current time and the time when data should be decoded or presented to a user. An MPEG-2 transport stream 774 carries these elementary streams and PESs as packets 775.

Each packet 775 includes a header 776 and a payload 778, where the header 776 includes information about the data and the payload 778 is the data. One of the most important parts of the header 776 is a payload identification (PID) 780, which marks the payload 778 as video data; audio data, etc, For example, three different packets 775 might contain video data, audio data, and song information. The respective PIDs 780 can be used to identify the packets with audio data and packets with song information, and the PSI 772 can be used to determine when to decode and present the information in each packet 775.

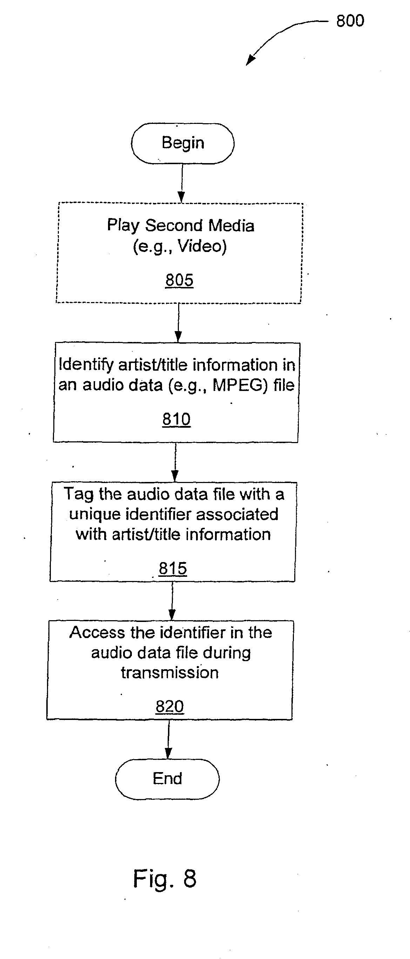

Fig. 8 is a flow diagram for an audio data tagging process 800 of the present invention. In optional step 805, the process 800 plays a second media 774, such as a video, to a user. Next, in step 810, the process 800 identifies artist and title information in an audio data file associated with the second media 774. At step 815, the process 800 tags or otherwise effectively couples (relates) the audio data with the identifier formed by the artist/title information obtained in step 810. For example, process step 815 marks PID 780 with the identifier in header 776 of the packet 775 containing the MPEG audio elementary stream 766. After tagging/marking the audio data, the process 800 provides access to the identifier (PID 780) in the audio data packet 775 during transmission of the media stream 774, 750 at step 820.

Other embodiments use existing song identification technology for tagging or identifying background music in videos. For example, songs could be tagged using a plug-in for Pro Tools, a digital audio workstation made by DigiDesign for recording and editing in music production, film scoring, television, and post production. The plug-in accesses an network-based service, such as the Gracenote Media Recognition Service, or other suitable application to identify the background music in a video by querying a database.

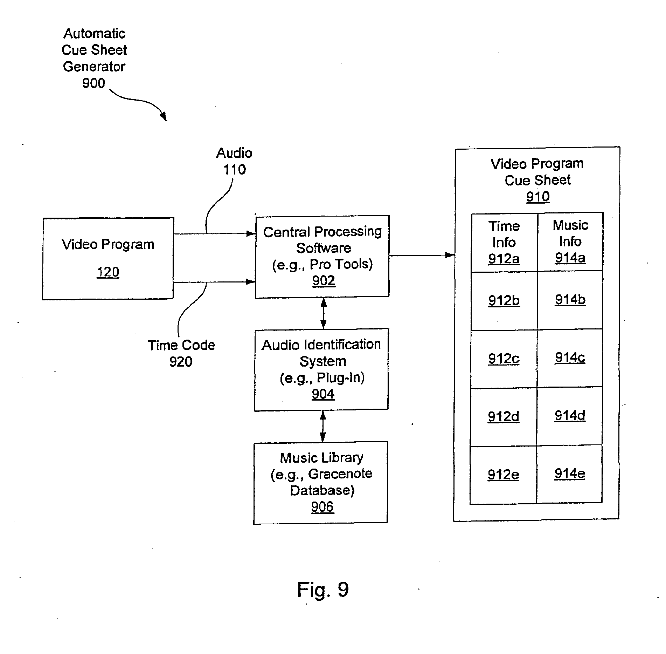

Fig. 9 shows an example automatic cue sheet generator 900 that identifies and tags background audio 110 in a video program 120 according to the present invention. Central processing software 902 is fed information pertaining to the video program 120, including the background audio (e.g., a song) 110 and a corresponding time code 920. The central processing software 902 uses an audio identification system 904, such as a licensed Gracenote application, to query a music library 906. The audio identification system 904 returns information about the background audio 110, including song title, artist name, album title, etc., to the central processing software 902. The central processing software 902 uses the returned information to generate a video program cue sheet 910, which comprises time info 912a-e and corresponding music info 914a-e for the video program 120.

In a preferred embodiment, the tagging/identification system effectively couples an identifier to background music 110 in a video program 120 using a plug-in 904 for Pro Tools 902 that queries the Gracenote system. To use the plug-in, a user first inserts the plug-in on the Pro Tools 902 music stem. The user then enters information about the video program 120, including program title, producer, episode number/title, actor names, etc. As the user adds background music 110 to the video program 120, the user drags and drops the corresponding files to the plug-in 904, which queries a music database 906 using a licensed application from Gracenote for song information.

As the user mixes the video program 120, the plug-in monitors the time code 920 and audio 110, building a cue sheet 910 with time information 912a-e, including start and stop times for each piece of audio/music 110. The plug-in 904 may also use available metadata for the audio content to improve accuracy when identifying particular songs, etc. In some cases, the plug-in 904 will not be able to identify the background music because the music is composed for the video program 120, is from a library of stock cues, or is too new to be in the music database 906. After finishing the mix, the user opens the plug-in 904, then manually identifies any unidentified songs 110 and updates the music database 906 with the manually entered information. The user may also review the automatically generated time codes 912a-e and music information 914a-e for accuracy.

Although the above description refers to the MPEG format, the present invention is usable on any audio data format digital or analog. For example, principles of the present invention can be used with MPEG-1, MPEG-3, WAV, AIFF, or the like. Principles of the present invention can also be used lossless formats, such as Apple Lossless Audio Codec (ALAC), in addition to lossy formats, such as MPEG-3.

Further, the first media (e.g., audio data) and second media (e.g., video data) may be stored on computer readable memory, such as semiconductor memory, solid-state memory, flash memory, magnetic tape, removable computer diskette, random access memory (RAM), read-only memory (ROM), digital video disc (DVD), compact disc (CD), CD-ROM, holographic memory, rigid magnetic disk, and any combination thereof. Similarly, the first and second media may be distributed via any one or combination of networks, including cable networks, satellite networks, computer networks, optical (including fiber optic) networks, wireless networks, and any combination thereof. The first and second media may be rendered to the user through a mobile phone, cell phone, digital media player, television, computer display, digital frame, and any combination thereof.

The purchased copy of the first media, third media, and so on may be downloaded to any one or combination of devices such as, but not limited to, a cell phone, mobile communication device, digital media player, computer, laptop, and hybrid thereof. In addition or alternative to downloading a copy, the purchased copy or indications thereof may be added to a playlist, data store, or other location accessible to a user. Indications of and links to purchased copies of songs may also be indexed in a data store, saved to a memory, or displayed on a website.

Elements of the diagrams described above may be implemented in software, hardware, or firmware. In addition, the elements of the diagrams described above may be combined or divided in any manner in software, hardware, or firmware. If implemented in software, the software may be written in any language that can support the embodiments disclosed herein. The software may be stored on any form of computer readable medium, such as random access memory (RAM), read only memory (ROM), compact disk read only memory (CD-ROM), and so forth. In operation, a general purpose or application specific processor loads and executes the software in a manner well understood in the art.

A user interface to the various embodiments and implementations may be affected through a remote (or other) control to a display subsystem, a remote (or other) control to a digital media player, various input/output (I/O) devices to a digital processor/laptop/computer/node, a mobile phone, similar mobile communications device, and the like, including combinations and hybrids thereof.

While this invention has been particularly shown and described with references to preferred embodiments thereof, it will be understood by those skilled in the art that various changes in form and details may be made therein without departing from the scope of the invention encompassed by the appended claims.

For example, the above embodiments describe presentations of a video work with a background soundtrack or portion thereof being the subject media (first media) of interest to the user of the present invention. The present invention is applicable to music or audio works as the second media with a corresponding or related video as the first/subject media made selectable by the present invention.

## Claims

1. A method for tagging audio data, comprising:
providing an identifier based on at least artist information of an audio work, the audio work formed of audio data;
effectively coupling the audio data and the identifier; and
providing access to the identifier in the audio data during transmission of the audio work.

2. A method as in claim 1, wherein the audio work is background music played in a second media.

3. A method as in claim 2, wherein the audio data is compatible with an MPEG format and the second media is video data.

4. An apparatus for tagging audio data, comprising:
a memory configured to store at least a first media;
a first process effectively coupling a portion of the memory and an identifier, the identifier being based on artist information of the first media; and
a second process enabling access to the identifier in the portion of the memory during a transmission of the first media.

5. An apparatus as in claim 4, wherein the first media is forming background music playing in a second media.

6. An apparatus as in claim 5, wherein the audio data is compatible with an MPEG format and the second media is video data.
